# EUROPÄISCHE PATENTSCHRIFT

(11) **EP 3 994 368 B1**
(45) Veröffentlichungstag und Bekanntmachung des Hinweises auf die Patenterteilung: **12.07.2023**
(21) Anmeldenummer: 20734525.7
(22) Anmeldetag: 23.06.2020
(51) Int. Cl.: F16C 25/08, F16C 27/04, F16H 57/028, F16H 57/039

(54) **LAGERANORDNUNG FÜR EINE SCHNECKENWELLE**
BEARING ASSEMBLY FOR A WORM SHAFT
AGENCEMENT DE PALIER DESTINÉ À UN ARBRE DE VIS

(30) Priorität: 05.07.2019 DE 202019103700 U; 17.09.2019 DE 202019105133 U
(43) Veröffentlichungstag der Anmeldung: 11.05.2022
(73) Patentinhaber: Rollax GmbH & Co. KG, 32107 Bad Salzuflen (DE)
(72) Erfinder: EBKE, Andreas, 32429 Minden (DE)
(74) Vertreter: Ter Meer Steinmeister & Partner
(86) Internationale Anmeldenummer: PCT/EP2020/067501
(87) Internationale Veröffentlichungsnummer: WO 2021/004779

(56) Entgegenhaltungen:
- EP-A1- 1 731 404
- WO-A1-2016/151306

## Beschreibung

Die Erfindung betrifft eine Lageranordnung für eine Schneckenwelle, mit einem Wälzlager, in dem die Schneckenwelle gelagert ist, und mit einem Gehäuse, in dem das Wälzlager elastisch in eine Richtung z quer zur Längsrichtung x der Schneckenwelle vorgespannt ist, wobei das Wälzlager in der zur Richtung z der Vorspannung und zur Längsrichtung x der Schneckenwelle senkrechten Richtung y beidseitig in dem Gehäuse abgestützt ist und zum Vorspannen des Wälzlagers eine ringförmige Feder vorgesehen ist, die das Wälzlager umgibt.

Aus EP 1 731 404 A1 ist eine Lageranordnung dieser Art bekannt, bei der die Vorpannkraft durch eine elastische Zunge gebildet wird, die in einem Stück mit der Feder ausgebildet ist und sich an einer Innenwand des Gehäuses abstützt.

Bei Schneckengetrieben wird das relativ komplizierte Schneckenrad häufig aus Kunststoff hergestellt, so dass aufgrund von Fertigungstoleranzen ein gewisses Spiel zwischen Schnecke und Schneckenrad auftreten kann. Durch Verschleiß der Schnecke kann sich dieses Spiel bei längerer Betriebsdauer noch vergrößern. Es sind deshalb Lageranordnungen der bekannt, mit denen die Schnecke einschließlich der sie tragenden Welle so in Richtung auf das Schneckenrad vorgespannt werden kann, dass das Spiel weitgehend beseitigt wird. Die federnde Abstützung des Wälzlagers hat bei vielen bekannten Lageranordnungen jedoch zur Folge, dass die Position des Wälzlagers nicht in allen verbleibenden Freiheitsgraden genau festgelegt ist, so dass es zu Funktionsstörungen oder erhöhtem Verschleiß kommen kann.

Aufgabe der Erfindung ist es , eine Lageranordnung der oben genannten Art zu schaffen, die einen kompakten Aufbau aufweist und eine stabile und präzise Positionierung und Führung des Wälzlagers ermöglicht.

Diese Aufgabe wird erfindungsgemäß dadurch gelöst, dass die Feder an einer Stelle ihres Umfangs in dem Gehäuse verankert ist und an einem der Verankerungsstelle diametral gegenüberliegenden Punkt am Außenumfang des Wälzlagers angreift.

Bei dieser Lageranordnung wird das Wälzlager so im Gehäuse geführt, dass es sich ausschließlich linear in der Richtung bewegen kann, in der die Spannkraft der Feder wirkt. Somit ist die Position des Wälzlagers und damit auch die Position der Schnecke präzise definiert. Die Feder ist bei der erfindungsgemäßen Lageranordnung eine ringförmige Zugfeder, die den Außenring des Wälzlagers zu der Seite des Gehäuses zieht, auf der die Feder am Gehäuse verankert ist. Da die Feder das Wälzlager umgibt, kann sie eine hohe Vorspannungskraft erzeugen, obgleich für die Feder nur ein äußerst geringer Bauraum in dem Gehäuse benötigt wird.

Vorteilhafte Ausgestaltungen der Erfindung sind in den Unteransprüchen angegeben.

Im folgenden werden Ausführungsbeispiele anhand der Zeichnung näher erläutert.

Es zeigen:
- Fig. 1: eine Stirnansicht einer Lageranordnung für eine im Schnitt dargestellte Schneckenwelle;
- Fig. 2: einen Längsschnitt durch die Lageranordnung und die Schneckenwelle;
- Fig. 3: einen Schnitt längs der Linie III-III in Fig. 2.
- Fig. 4: eine Stirnansicht einer Lageranordnung gemäß einem anderen Ausführungsbeispiel;
- Fig. 5: einen Schnitt längs der Linie V-V in Fig. 4;
- Fig. 6: einen Schnitt längs der Linie VI-VI in Fig. 5;
- Fig. 7: eine Stirnansicht einer Lageranordnung gemäß einem weitern Ausführungsbeispiel; und
- Fig. 8: einen Schnitt längs der Linie VIII-VIII in Fig. 7.

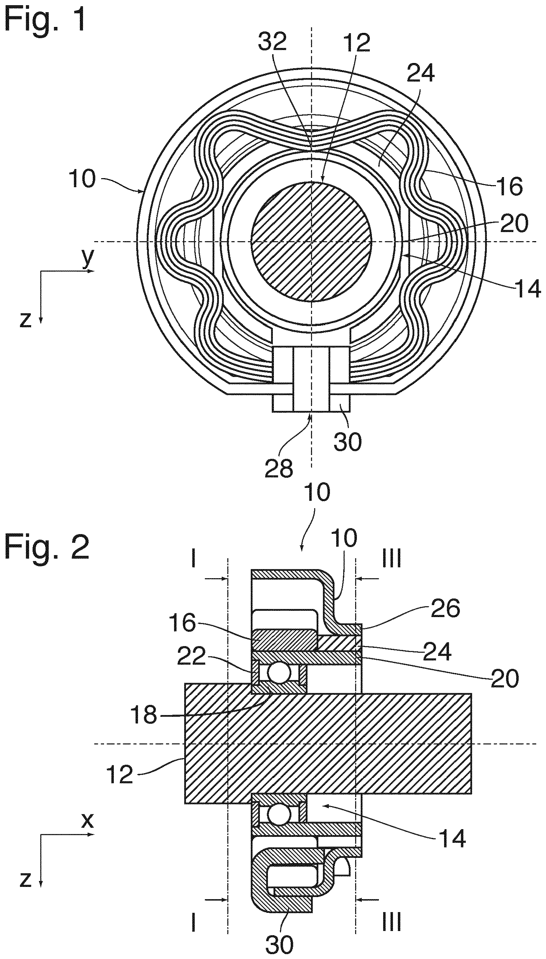

Die in Fig. 1 gezeigte Lageranordnung weist ein topfförmiges, an einer Seite abgeflachtes Gehäuse 10 auf, beispielsweise aus Stahlblech, das von einer Schneckenwelle 12 durchsetzt wird. Die Schneckenwelle 12 ist in Fig. 1 im Schnitt dargestellt. Die Schnittebene ist in Fig. 2 mit I-I bezeichnet und verläuft durch einen im Durchmesser vergrößerten Abschnitt der Schneckenwelle 12, der dazu bestimmt ist, die eigentliche Schnecke zu tragen.

In Fig. 1 blickt man auf ein offenes Ende des im wesentlichen zylindrischen Gehäuses 10, das ein Wälzlager 14 für die Schneckenwelle sowie eine ringförmige, das Wälzlager 14 umgebende Feder 16 aufnimmt.

Wie Fig. 2 zeigt, ist das Wälzlager 14 ein Rillenkugellager, dessen Innenring 18 auf einem im Durchmesser reduzierten Abschnitt der Schneckenwelle 12 sitzt. In Fig. 1 ist deshalb der Innenring 18 durch den im Durchmesser erweiterten Teil der Schneckenwelle 12 verdeckt, so dass von dem Wälzlager 14 dort nur ein Außenring 20 und eine von zwei ringförmigen Dichtungen 22 zu sehen sind, die den von den Lagerkugeln und dem Kugelkäfig eingenommenen Raum abdichten. Der Außenring ist auf der in Fig. 1 vom Betrachter abgewandten Seite axial verlängert und in einem Gleitring 24 aus Kunststoff aufgenommen, der seinerseits von einem im Durchmesser reduzierten Hals 26 des Gehäuses 10 umgeben ist.

Die Feder 16 ist eine zu einem Wellenring formte Blattfeder, die an einer Verankerungsstelle 28 mit einer Klammer 30 oder einem Niet am Rand des Gehäuses 10 verankert ist und an einem der Verankerungsstelle 28 diametral gegenüberliegenden Punkt 32 am Außenumfang des Außenrings 20 des Wälzlagers 14 angreift. Zwischen der Verankerungsstelle 28 und dem Punkt 32 bildet die Feder 16 auf jeder Seite drei radial nach außen vorspringende Wellenberge, zwischen denen zwei Wellentäler liegen, deren tiefster Punkt jedoch immer noch einen gewissen Abstand zum Wälzlager 14 aufweist, so dass das Wälzlager die Verformung der Feder nicht behindert. Die Wellenberge können sich dagegen mit ihrem Scheitel an der Umfangswand des Gehäuses 10 abstützen.

Der Punkt 32, an dem die Feder am Wälzlager 14 anliegt, befindet sich an der tiefsten Stelle eines Wellentals. An diesem Punkt 32 übt die Feder 16 auf das Wälzlager 14 eine Kraft in einer Richtung z aus, die zur Längsrichtung x der Schneckenwelle 12 senkrecht ist (siehe Fig. 2). Da die Feder 16 als Zugfeder wirkt, hat sie im Gegensatz zu einer Druckfeder nicht die Tendenz, seitlich auszubrechen, wodurch es zu einer Änderung der Wirkrichtung der Kraft und möglicherweise zu einer Positionsverlagerung des Wälzlagers 14 und der Schneckenwelle 12 kommen könnte. Die Feder 16 ist raumsparend in dem Ringraum zwischen der Umfangswand des Gehäuses 10 und dem Außenring des Wälzlagers 14 aufgenommen und kann dabei eine hohe Kraft auf das Wälzlager und die Schneckenwelle ausüben.

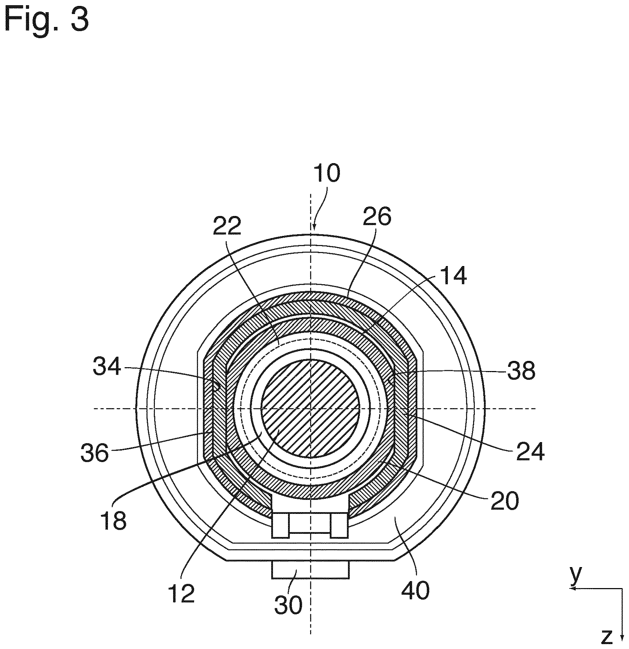

Fig. 3 zeigt einen Schnitt durch die Lageranordnung in einer Schnittebene, die durch den Hals 26 des Gehäuses 10 sowie durch den Gleitring 24 und den axial verlängerten Teil des Außenrings 20 des Wälzlagers hindurchgeht. Die Innenkontur des Halses 26 ist nicht kreisförmig, sondern bildet zwei parallele, einander gegenüberliegende Schlüsselflächen 34, an denen komplementäre Schlüsselflächen 36 des Gleitringes 24 anliegen. Der Gleitring 24 bildet seinerseits am inneren Umfang zwei Gleitflächen 38, die parallel zueinander und zu den Schlüsselflächen 34, 36 verlaufen. Der überstehende Teil des Außenrings 20 des Wälzlagers hat auf den größten Teil seines Umfangs in dem Gleitring 24 ein gewisses radiales Spiel, beispielsweise in der Größenordnung von 0,7 mm, so dass er sich relativ zu dem Gleitring 24 und relativ zum Gehäuse 10 in der Richtung z bewegen kann, so dass die Kraft der Feder 16 auf den die Schnecke tragenden Teil der Schneckenwelle 12 übertragen wird. In der zu der Richtung z und zur Längsrichtung x der Schneckenwelle 12 senkrechten Richtung y hat der Außenring 20 hingegen zwei Abflachungen, mit denen er im wesentlichen spielfrei und äußerst reibungsarm an den Gleitflächen 38 des Gleitrings 24 geführt ist. Auch eine Verdrehung des Wälzlagers um die Längsachse der Schneckenwelle 12 wird so verhindert. Zur stabilen Abstützung des Außenrings 20 an den Gleitflächen 38 trägt auch der Umstand bei, dass die betreffenden Umfangsabschnitte des Gleitrings 24 ihrerseits durch den Hals 26 abgestützt werden, der seinerseits durch die zwischen diesem Hals und der äußeren Umfangswand des Gehäuses 10 gebildete Schulter 40 versteift wird.

In Fig. 1 ist zu erkennen, dass die Stirnfläche des Gleitrings 24 im Bereich der Gleitflächen 38 durch den äußeren Umfang des Außenrings 20 des Wälzlagers verdeckt wird, weil sich die Abflachungen an diesem Außenring nur in dem axialen Fortsatz befinden. Auch der Außenring 20 bildet somit am Übergang zwischen den Abflachungen und dem eigentlichen Wälzlager 14 zwei parallele Schultern, mit denen er an der Stirnfläche des Gleitrings 24 anliegt. Auf diese Weise wird auch die Position des Wälzlagers und der Schneckenwelle 12 in der Längsrichtung x der Schneckenwelle fixiert.

In Fig. 1 und 3 ist außerdem zu erkennen, dass der Hals 26 des Gehäuses 10 und der Gleitring 24 an der Stelle der Klammer 30 unterbrochen sind, so dass die Feder 16 mit Hilfe der Klammer 30 stabil am Gehäuse fixiert werden kann, ohne dass die Klammer am Gleitring oder an dem Hals 26 anstößt.

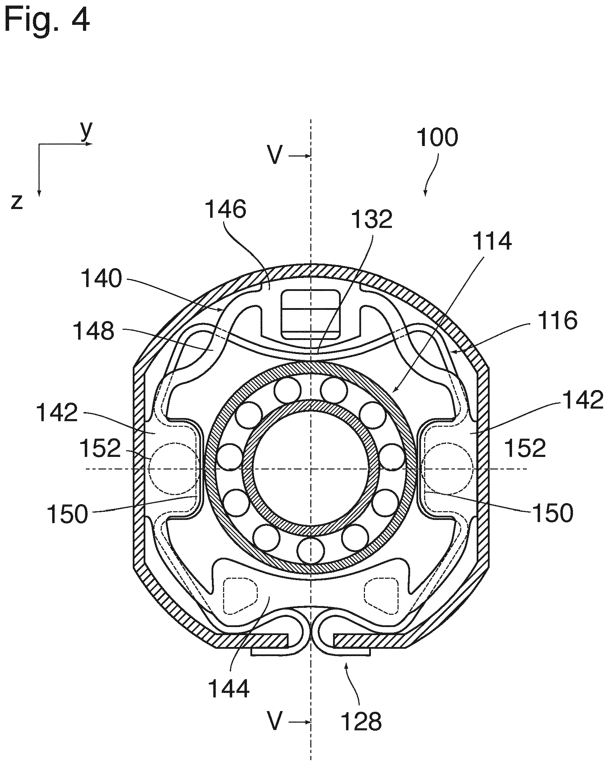

In Figuren 4 bis 6 ist ein zweites Ausführungsbeispiel der Erfindung gezeigt. Einzelheiten, die in ihrer Funktion den bereits beschriebenen Einzelheiten bei dem ersten Ausführungsbeispiel entsprechen, sind mit den gleichen Bezugszeichen, jedoch vermehrt um 100 bezeichnet.

Die Lageranordnung weist demgemäß ein Gehäuse 100 auf, das ein Wälzlager 114 sowie eine ringförmige Feder 116 aufnimmt. In Fig. 4 blickt man ähnlich wie in Fig. 1 in die offene Seite des topfförmigen Gehäuses 100. Die Feder 116 hat im wesentlichen die gleiche Form wie die Feder 16 in Fig. 1, hat jedoch eine deutlich kleinere Federkonstante. Eine Verankerungsstelle 128 wird dadurch gebildet, dass die ringförmige Feder an einer Stelle unterbrochen ist und die einander gegenüberliegenden Enden zu Ösen gebogen sind, die in einem Durchbruch in der Umfangswand des Gehäuses 100 eingehakt sind. Die Feder 116 berührt den Außenring des Wälzlagers 114 an einem Punkt 132, der der Verankerungsstelle 128 diametral gegenüberliegt.

Die beidseitige Abstützung des Wälzlagers 114 in der Richtung y wird bei diesem Ausführungsbeispiel dadurch erreicht, dass in dem Gehäuse 100 ein ringförmiger Stützkörper 140 aus Kunststoff angeordnet ist, der mit zwei einander diametral gegenüberliegenden Stützklötzchen 142 in den Ringraum zwischen dem Außenring des Wälzlagers 114 und der Umfangswand des Gehäuses 100 eingreift. Im Bereich der Verankerungsstelle 128 und im Bereich des Punktes 132 bildet der Stützkörper 140 zwei Anschlagklötze 144 und 146, die ebenfalls in den Ringraum eingreifen. Die Führungsklötzchen 142 und die Anschlagklötze 144 und 146 sind durch verhältnismäßig dünne flexible Arme 148 des Stützkörpers miteinander verbunden. Die Arme 148 liegen in einer gegenüber der Feder 116 versetzten Ebene, so dass sie in Fig. 4 die Feder 116 teilweise verdecken.

Im Bereich der Stützklötzchen 142 bildet die Feder 116 zwei Führungsabschnitte 150, die sich geradlinig in der Richtung z erstrecken und dem Wälzlager 114 in dieser Richtung Führung geben. Diese Führungsabschnitte 150 werden von außen jeweils durch eines der Stützklötzchen 142 abgestützt, die sich ihrerseits an der Umfangswand des Gehäuses 100 abstützen. Eine spielfreie Lagerung der Stützklötzchen 142 wird dadurch erreicht, dass jedes Stützklötzchen einen zylindrischen, gummielastischen Klemmkörper 152 aufnimmt, der sich an dem Führungsabschnitt 150 der Feder abstützt und das Stützklötzchen elastisch gegen die Außenwand des Gehäuses 100 vorspannt.

Die Feder 116 hat in den Abschnitten, die an die Führungsabschnitte 150 angrenzen, eine Kontur, die zu der Kontur der Stützklötzchen 142 komplementär ist und mit der sie die Stützklötzchen umschließt, so dass der Stützkörper 140 und die Feder 116 formschlüssig in ihrer Position relativ zueinander gehalten werden.

Durch die Anschlagklötze 144 und 146 wird das Spiel des durch die Feder 116 vorgespannten Wälzlagers 114 längs der Achse z in beiden Richtungen begrenzt. Der Anschlagklotz 144 stützt sich an den zu Ösen gebogenen Enden der Feder 116 ab und hat gegenüber dem Außenring des Wälzlagers 114 im Normalzustand ein geringes Spiel.

Der Anschlagklotz 146 stützt sich an der Umfangswand des Gehäuses 100 ab und hat zu der Feder 116 am Punkt 132 ein geringes Spiel.

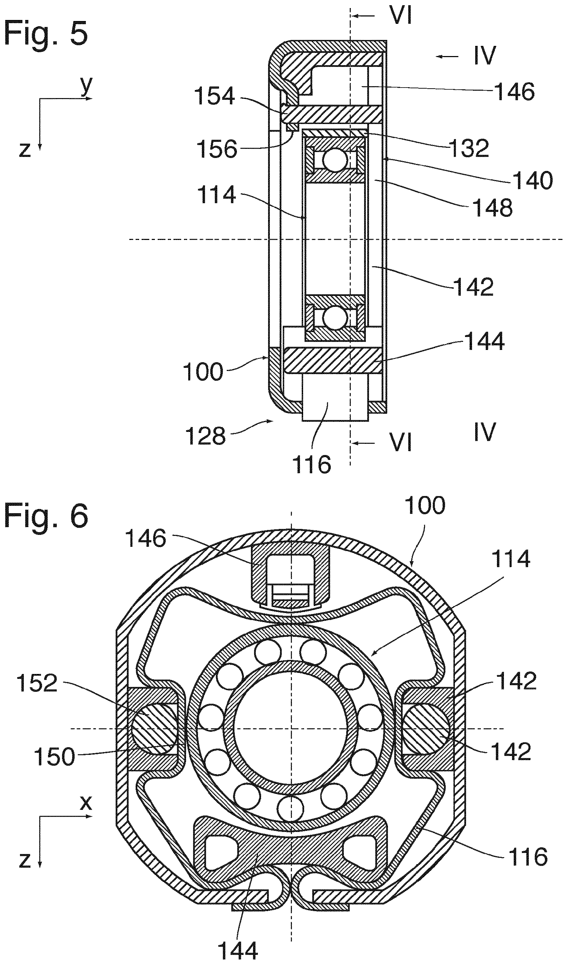

In Figuren 5 und 6 sind die Anschlagklötze 144 und 146 im Schnitt dargestellt. Der Anschlagklotz 146 ist hohl ausgebildet und hat zugleich die Funktion eines Clips 154, der an einem im Boden des Gehäuses 100 gebildeten Einzug 156 verrastet ist und dadurch die gesamte Einheit aus Stützkörper 140 und Feder 116 in Position hält. In Fig. 5 geht die Schnittebene durch den Punkt 132, an dem die Feder 116 am Wälzlager 114 anliegt. Ansonsten sieht man von der Feder 116 in Fig. 5 eine der beiden Ösen an der Verankerungsstelle 128.

In Fig. 5 geht die Schnittebene außerdem durch einen massiven Teil des Verankerungsklotzes 144, der jedoch, wie Fig. 6 zeigt, beiderseits dieses massiven Teils Hohlräume aufweist.

Von dem Stützkörper 140 sieht man in Fig. 5 außerdem zwei der Arme 148 sowie einen Teil eines der in den Ringraum ragenden Stützklötzchen 142.

In Fig. 6 ist zu erkennen, wie die Stützklötzchen 142 die Führungsabschnitte 150 der Feder 116 abstützen und wie die Führungsklötzchen durch die Klemmkörper 152 vorgespannt werden.

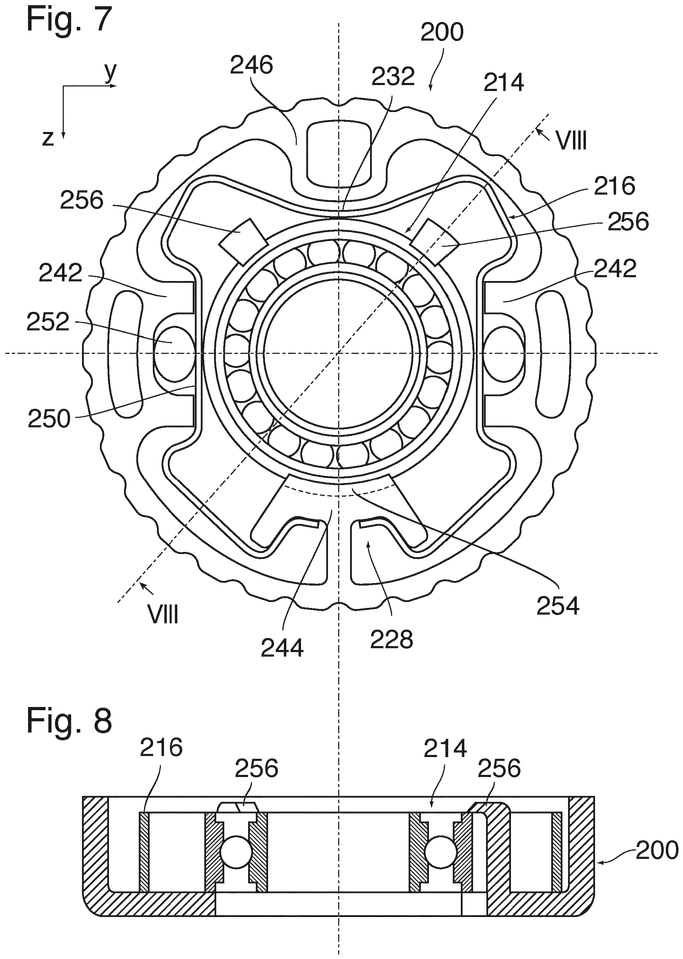

In Figuren 7 und 8 ist ein drittes Ausführungsbeispiel der Erfindung gezeigt. Einzelheiten, die in ihrer Funktion den bereits beschriebenen Einzelheiten bei dem zweiten Ausführungsbeispiel entsprechen, sind mit den gleichen Bezugszeichen, jedoch vermehrt um 100 bezeichnet.

Die Lageranordnung weist demgemäß ein Gehäuse 200 auf, das ein Wälzlager 214 sowie eine ringförmige Feder 216 aufnimmt. In Fig. 7 blickt man ähnlich wie in Fig. 4 in die offene Seite des topfförmigen Gehäuses 200. Die Feder 216 hat annähernd die gleiche Form wie die Feder 116 in Fig. 4.

Anders als das Gehäuse 100 ist das Gehäuse 200 an seinem Umfang vollständig geschlossen. Stützklötzchen 242 zur beidseitigen Abstützung des Wälzlagers 214 in der Richtung y sowie Anschlagklötze 244 und 246 zur Begrenzung des Spiels des Wälzlagers in der Richtung z sind hier in das Gehäuse 200 integriert.

Eine Verankerungsstelle 228 wird dadurch gebildet, dass die Feder 216 mit einander gegenüberliegenden hakenförmigen Enden an einer ankerförmigen Kontur des Anschlagklotzes 244 eingehakt sind. Die Feder 216 berührt den Außenring des Wälzlagers 214 an einem Punkt 232, der der Verankerungsstelle 228 diametral gegenüberliegt.

Im Bereich der Stützklötzchen 242 bildet die Feder 216 auch hier zwei Führungsabschnitte 250, die sich geradlinig in der Richtung z erstrecken und dem Wälzlager 214 in dieser Richtung Führung geben. Diese Führungsabschnitte 250 werden von außen jeweils durch eines der Stützklötzchen 242 abgestützt, die jeweils einen zylindrischen, gummielastischen Klemmkörper 252 aufnehmen.

Der Anschlagklotz 244 bildet auf seiner dem Wälzlager 214 zugewandten Seite eine Nase 254, die den Rand des Außenrings des Wälzlagers übergreift. Auf der entgegengesetzten Seite des Wälzlagers ragen vom Boden des Gehäuses 200 zwei elastische Klauen 256 auf, die ebenfalls den Rand des Außenrings des Wälzlagers übergreifen, wie in Fig. 8 zu erkennen ist. Bei der Montage der Lageranordnung kann das Wälzlager 214 unter dem Rand der Nase 254 eingehakt und dann mit den Klauen 256 verclipst werden. Auf diese Weise wird das Wälzlager in der Richtung x stabil zwischen dem Boden des Gehäuses 200 und den Klauen 256 und der Nase 254 gehalten, so dass das Lager nur in der Wirkrichtung der Feder 216, also der Richtung z, etwas Spiel hat. Auch die Feder 214 kann bei der Montage einfach von der offenen Seite her in das Gehäuse 200 eingelegt und am Anschlagklotz 244 verankert werden.

## Patentansprüche

1. Lageranordnung für eine Schneckenwelle (12), mit einem Wälzlager (14; 114; 214), in dem die Schneckenwelle (12) gelagert ist, und mit einem Gehäuse (10; 100; 200), in dem das Wälzlager (14; 114; 214) elastisch in eine Richtung z quer zur Längsrichtung x der Schneckenwelle (12) vorgespannt ist, wobei das Wälzlager (14; 114; 214) in der zur Richtung z der Vorspannung und zur Längsrichtung x der Schneckenwelle (12) senkrechten Richtung y beidseitig in dem Gehäuse (10; 100; 200) abgestützt ist und zum Vorspannen des Wälzlagers (12) eine ringförmige Feder (16; 116; 216) vorgesehen ist, die das Wälzlager (14; 114; 214) umgibt, **dadurch gekennzeichnet, dass** die Feder (16; 116; 216) an einer Stelle ihres Umfangs in dem Gehäuse (10; 100; 200) verankert ist und an einem der Verankerungsstelle (28; 128; 228) diametral gegenüberliegenden Punkt (32; 132; 232) am Außenumfang des Wälzlagers (14; 114; 214) angreift.

2. Lageranordnung nach Anspruch 1, bei der die Feder (16; 116; 216) wellenförmig, mit radial vorspringenden Wellenbergen, um die Schneckenwelle (12) herum verläuft.

3. Lageranordnung nach Anspruch 1 oder 2, bei der die Feder (16) an der Verankerungsstelle (28) mit einer Klammer (30) oder einem Niet am Rand des Gehäuses (10) fixiert ist.

4. Lageranordnung nach einem der vorstehenden Ansprüche, bei der ein Außenring (20) des Wälzlagers (14) axial über das eigentliche Wälzlager hinaus verlängert ist und die beidseitige Abstützung des Wälzlagers (14) in dem Gehäuse (10) an diesem verlängerten Abschnitt des Außenrings (20) erfolgt.

5. Lageranordnung nach einem der Ansprüche 1 bis 3, bei dem zur beidseitigen Abstützung des Wälzlagers (114) in der Richtung y ein ringförmiger Stützkörper (140) vorgesehen ist, der mit zwei einander diametral gegenüber liegenden Stützklötzchen (142) in den Zwischenraum zwischen dem Außenumfang des Wälzlagers (114) und einer Umfangswand des Gehäuses (100) eingreift.

6. Lageranordnung nach einem der Ansprüche 1 bis 3, bei dem zur beidseitigen Abstützung des Wälzlagers (214) in der Richtung y zwei einander in dem Gehäuse (200) diametral gegenüberliegende Stützklötzchen (242) vorgesehen sind, die in einem Stück mit dem Gehäuse ausgebildet sind.

7. Lageranordnung nach Anspruch 5 oder, bei der die Feder (116; 216) zwei gerade Führungsabschnitte (150; 250) bildet, die sich in der Richtung z erstrecken und dem Wälzlager (114; 214) Führung geben und die von außen durch die Stützklötzchen (142; 242) abgestützt werden.

8. Lageranordnung nach Anspruch 7, bei der die Stützklötzchen (142; 242) von Teilen der Feder (116; 216), die die Führungsabschnitte (150) bilden, umgriffen werden.

9. Lageranordnung nach Anspruch 7 oder 8, bei der jedes Führungsklötzchen (142; 242) einen gummielastischen Klemmkörper (152; 252) aufnimmt, der in dem Raum zwischen den Führungsabschnitt (150; 250) der Feder und dem Führungsklötzchen (142; 242) verspannt ist.

10. Lageranordnung nach einem der Ansprüche 6 bis 9, bei der das Gehäuse (200) mindestens einen Anschlagklotz (244, 246) bildet, der das Spiel des Wälzlagers (114) längs der Achse z in mindestens einer Richtung begrenzt.

11. Lageranordnung nach Anspruch 10, bei der der Anschlagklotz (246) oder einer der Anschlagklötze zwischen der Umfangswand des Gehäuses (200) und dem Punkt (232) angeordnet ist, an dem die Feder (216) am Wälzlager (214) anliegt.

12. Lageranordnung nach einem der Anspruch 10 oder 11, bei dem die Feder (216) an der Verankerungsstelle (228) geteilt ist und zwei Haken bildet, mit denen sie an dem Anschlagklotz (244) oder deinem der Anschlagklötze eingehakt ist.

13. Lageranordnung nach Anspruch 12, bei der der Anschlagklotz (244), an dem die Feder eingehakt ist, eine Nase (254) aufweist, mit der er den Rand des Wälzlagers (214) übergreift.

14. Lageranordnung nach Anspruch 13, bei der vom Boden des Gehäuses (200) mindestens eine elastische Klaue (256) aufragt, die den Rand des Wälzlagers (214) auf der der Nase (254) gegenüberliegenden Seite übergreift.

## Claims

1. A bearing assembly for a worm shaft (12), comprising a rolling bearing (14; 114; 214) in which the worm shaft (12) is mounted, and comprising a housing (10; 100; 200) in which the rolling bearing (14; 114; 214) is elastically pretensioned in a direction z transverse to the longitudinal direction x of the worm shaft (12wherein the rolling bearing (14; 114; 214) is supported in the housing (10; 100; 200) on both sides in the direction y perpendicular to the pretensioning direction z and to the longitudinal direction x of the worm shaft (12), and an annular spring (16; 116; 216) is provided for pretensioning the rolling bearing (14; 114; 214), ), **characterized in that** the spring (16; 116; 216) surrounds the rolling bearing and is anchored at the housing (10; 100; 200) at a point on its circumference and engages the outer circumference of the rolling bearing (14; 114; 214) at a point (32; 132; 232) diametrically opposite to the anchoring point (28; 128; 228).

2. The bearing assembly according to claim 1, wherein the spring (16; 116; 216) extends around the worm shaft (12) in a wave-shape with radially projecting wave crests.

3. The bearing assembly according to claim 1 or 2, wherein the spring (16) is attached to the edge of the housing (10) at the anchoring point (28) by means of a clamp (30) or a rivet.

4. The bearing assembly according to any of the preceding claims, wherein an outer race (20) of the rolling bearing (14) is extended in axial direction beyond the main part of the rolling bearing, and the support of the rolling bearing (14) on both sides in the housing (10) is provided via this projecting part of the outer race (20).

5. The bearing assembly according to any of the claims 1 to 3, wherein, for supporting the rolling bearing (14) on both sides in the direction y, an annular support body (140) is provided which engages into the space between the outer periphery of the rolling bearing (114) and a peripheral wall of the housing (100) with two diametrically opposite supports blocks (142).

6. The bearing assembly according to any of the claims 1 to 3, wherein, for supporting the rolling bearing (214) on both sides in the direction y, two diametrically opposite support blocks (242) are provided in the housing (200), said support blocks being formed integrally with the housing.

7. The bearing assembly according to claim 5 or 6, wherein the spring (116; 216) has two straight guide sections (150; 250) which extend in the direction z for guiding the rolling bearing (114; 214), said guide sections being supported from outside by the support blocks (142; 242).

8. The bearing assembly according to claim 7, wherein the support blocks (142; 242) are embraced by parts of the spring (116; 216) that form the guide sections (150).

9. The bearing assembly according to claim 7 or 8, wherein each of the support blocks (142; 242) accommodates a rubber-elastic clamping body (152; 252) which is held under tension in the space between the guide section (150; 250) of the spring and the guide block (142; 242).

10. The bearing assembly according to any of the claims 6 to 9, wherein the housing (200) forms at least one abutment block (244; 246) which limits the play of the rolling bearing (114) along the axis z in at least one direction.

11. The bearing assembly according to claim 10, wherein the abutment block (246) or one of the abutment blocks is arranged between the peripheral wall of the housing (200) and the point (232) in which the spring (216) engages the rolling bearing (214).

12. The bearing assembly according to claim 10 or 11, wherein the spring (216) is interrupted at the anchoring point (228) and forms two hooks with which it is hooked-in at the abutment block (244) or one of the abutment blocks.

13. The bearing assembly according to claim 12, wherein the abutment block (244) at which the spring is hooked-in, has a lip (254) which straddles the edge of the rolling bearing (214).

14. The bearing assembly according to claim 13, wherein at least one elastic claw (252) projects from the bottom of the housing (200) and straddles the edge of the rolling bearing (200) on the side opposite to the lip (254).

## Revendications

1. Dispositif de palier pour un arbre de vis sans fin (12), avec un palier à roulements (14 ; 114 ; 214), dans lequel l'arbre de vis sans fin (12) est logé et avec un boîtier (10 ; 100 ; 200), dans lequel le palier à roulements (14 ; 114 ; 214) est précontraint de manière élastique dans une direction z transversale par rapport à la direction longitudinale x de l'arbre de vis sans fin (12), dans lequel le palier à roulements (14 ; 114 ; 214) est appuyé dans la direction y perpendiculaire à la direction z de la précontrainte et à la direction longitudinale x de l'arbre de vis sans fin (12), de deux côtés dans le boîtier (10 ; 100 ; 200) et, pour la précontrainte du palier à roulements (12), un ressort annulaire (16 ; 116 ; 216) est prévu, qui entoure le palier à roulements (14 ; 114 ; 214), **caractérisé en ce que** le ressort (16 ; 116 ; 216) est ancré à un endroit de sa circonférence dans le boîtier (10 ; 100 ; 200) et s'emboîte, au niveau d'un point (32 ; 132 ; 232) sur la circonférence extérieure du palier à roulements (14 ; 114 ; 214), diamétralement opposé au point d'ancrage (28 ; 128 ; 228).

2. Dispositif de palier selon la revendication 1, dans lequel le ressort (16 ; 116 ; 216) s'étend, avec des ondulations avec des crêtes dépassant radialement, autour de l'arbre de vis sans fin (12).

3. Dispositif de palier selon la revendication 1 ou 2, dans lequel le ressort (16) est fixé au point d'ancrage (28) avec une agrafe (30) ou un rivet au bord du boîtier (10) .

4. Dispositif de palier selon l'une des revendications précédentes, dans lequel un anneau extérieur (20) du palier à roulements (14) est prolongée axialement au-delà du palier à roulements proprement dit, et l'appui bilatéral du palier à roulements (14) a lieu dans le boîtier (10) au niveau de cette portion prolongée de l'anneau extérieur (20).

5. Dispositif de palier selon l'une des revendications 1 à 3, dans lequel, pour l'appui bilatéral du palier à roulements (114) dans la direction y, un corps d'appui annulaire (140) est prévu, qui s'emboîte, avec deux plots d'appui (142) diamétralement opposés entre eux, dans l'espace intermédiaire entre la circonférence extérieure du palier à roulements (114) et une paroi circonférentielle du boîtier (100).

6. Dispositif de palier selon l'une des revendications 1 à 3, dans lequel, pour l'appui bilatéral du palier à roulements (114) dans la direction y, sont prévus deux plots d'appui (242) diamétralement opposés entre eux dans le boîtier (200), qui sont réalisés d'une seule pièce avec le boîtier.

7. Dispositif de palier selon la revendication 5, dans lequel le ressort (116 ; 216) forme deux portions de guidage droites (150 ; 250) qui s'étendent dans la direction z et qui guident le palier à roulements (114 ; 214) et qui sont soutenus de l'extérieur par les plots d'appui (142 ; 242).

8. Dispositif de palier selon la revendication 7, dans lequel les plots d'appui (142 ; 242) sont entourées par des parties du ressort (116 ; 216) qui constituent les portions de guidage (150).

9. Dispositif de palier selon la revendication 7 ou 8, dans lequel chaque plot de guidage (142 ; 242) loge un corps de serrage (152 ; 252) en caoutchouc élastique, qui s'étend dans l'espace entre la portion de guidage (150 ; 250) du ressort et le plot de guidage (142 ; 242).

10. Dispositif de palier selon l'une des revendications 6 à 9, dans lequel le boîtier (200) forme au moins un plot de butée (244, 246) qui limite le jeu du palier à roulements (114) le long de l'axe z dans au moins une direction.

11. Dispositif de palier selon la revendication 10, dans lequel le plot d'appui (246) ou un des plots d'appui est disposé entre la paroi circonférentielle du boîtier (200) et le point (232) au niveau duquel le ressort (216) s'appuie contre le palier à roulements (214).

12. Dispositif de palier selon l'une des revendications 10 ou 11, dans lequel le ressort (216) est divisé au niveau du point d'ancrage (228) et forme deux crochets avec lesquels il est accroché au plot de butée (244) ou à un des plots de butée.

13. Dispositif de palier selon la revendication 12, dans lequel le plot de butée (244) auquel le ressort est accroché comprend un embout (254) avec lequel il recouvre le bord du palier à roulements (214).

14. Dispositif de palier selon la revendication 13, dans lequel, du fond du boîtier (200), dépasse au moins une griffe élastique (256) qui recouvre le bord du palier à roulements (214) sur le côté opposé à l'embout (254).
